# EUROPEAN PATENT APPLICATION

(11) **EP 2 184 216 A2**
(43) Date of publication of application: **12.05.2010**
(21) Application number: 09398014.2
(22) Date of filing: 05.11.2009
(51) Int. Cl.: B62B 3/10, G06Q 10/00

(54) **Set composed of a modular trolley and a wagon**

(30) Priority: 06.11.2008 PT 10369009 U
(71) Applicant: Modelo Continente Hipermercados, S.A., 4470 Maia (PT)
(72) Inventor: Pereira Cruz Silva, Tiago José, Vila Nova de Famalicão (PT)
(74) Representative: Pereira da Cruz, Joao

(57) **Abstract**

This invention relates to a set composed of a modular trolley (1) and a wagon (2) for the transport of shipping boxes (3), which can be moved separately or together, wherein the said modular trolley (1) comprises a tray (8) for a TabletPC-like hardware with a touch screen (12) where a software has been installed for the purpose of knowing and checking the information as regards the purchase orders.

## Description

### SCOPE OF THE INVENTION

This invention relates to a set composed of a modular trolley and a wagon, which is to be used as a means of transport for picking up merchandise in shipping boxes.

The modular trolley and the wagon can be moved, by the action of an operator, separately or together according to the place of the store or warehouse. The wagon has an adapted structure aimed at circulating in larger areas, while the modular trolley has been designed to circulate in a faster and more flexible way in smaller areas.

The modular trolley comprises a mobile TabletPC-like hardware which is provided with an optical bar code reading device, these being powered by a gel-type battery, the said hardware enabling to display and check the information concerning the orders and relevant items.

### PRIOR ART

Trolleys intended for use in stores or warehouses are already known and available on the market, such as the shopping trolleys which are susceptible of being attached to other shopping trolleys with an identical configuration. In addition to being attachable to identical trolleys, the aforementioned trolleys are coupled in such a way that they do not increase the loading capacity, nor do they present the modularity of the set composed of a modular trolley and a wagon.

### SUMMARY OF THE INVENTION

The set composed of modular trolley and wagon according to the present invention relates to a means of transport for shipping boxes, and comprises a modular trolley and a wagon which can be coupled / uncoupled and moved separately or together, depending on the needs of the operator or on the available space of the store or warehouse.

The modular trolley comprises a tray for a computer device which is powered by a gel-type battery, this device being composed of a tabletPC-like hardware with touch screen and a bar code reader, for the purpose of knowing and checking the information as regards purchase orders.

### BRIEF DESCRIPTION OF THE DRAWINGS

The following description is made with reference to the enclosed drawings which are presented for reference purposes only and have a non-limiting character, wherein:
Figure 1 represents a view of the modular trolley with two shipping boxes, the former being unlatched from the wagon with four shipping boxes;
Figure 2 represents a view of the modular trolley with two shipping boxes, the former being coupled to the wagon with shipping boxes;
Figure 3 represents a view of the modular trolley when coupled to the wagon, without the shipping boxes and without the hardware and its battery;
Figure 4 represents a view of the modular trolley when unlatched from the wagon, without the shipping boxes and without the hardware and its battery.

### DETAILED DESCRIPTION OF THE INVENTION

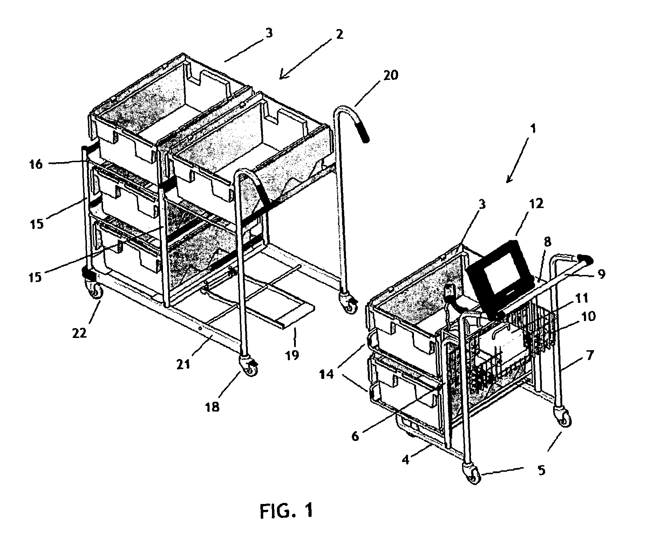

As can be observed in Figure 1, the set composed of modular trolley (1) and wagon (2) is capable of carrying up to six shipping boxes (3) and circulating separately by the action of an operator according to the place of the store or warehouse. The wagon (2) has an adapted structure aimed at circulating in larger areas, while the modular trolley (1) has been designed to circulate in a faster and more flexible way in smaller areas.

The set composed of a modular trolley (1) and a wagon (2) may be used in foodstuff stores wherein its purpose is to collect goods in the store or warehouse for order fulfilment, such as for instance the orders being placed by clients through Internet. The collected goods are put in appropriate shipping boxes, so that they are subsequently delivered to clients.

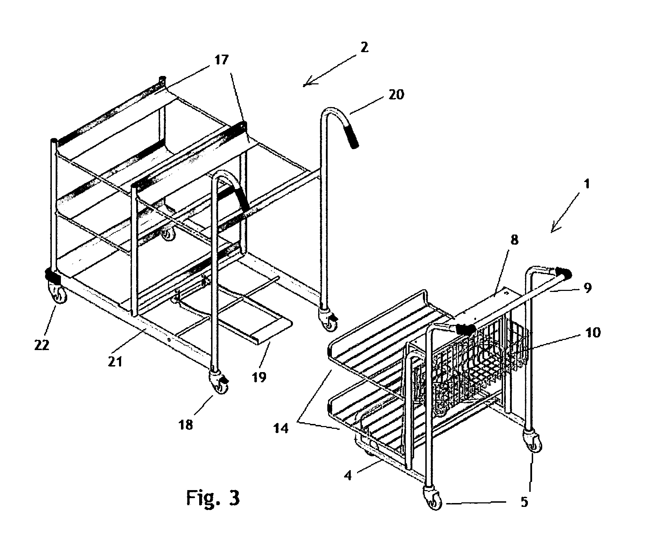

The modular trolley (1) illustrated in Figures 1 and 3 has the shape of a "L" and is comprised of a metallic structure including a horizontal chassis (4) with four directional caster wheels (4) and two vertical L-shaped reinforcing elements (6) which in their turn are connected to two vertical rods (7) converging into a handle-bar (9). The vertical reinforcing elements (6) and the vertical rods (7) sustain a tray (8) for Hardware and bar code reader, which is located under the handle-bar (9), a metal grid basket (10) also located under the handle-bar (9) and one or two metal grid racks (14) for shipping boxes (3).

The metallic structure of the modular trolley (1), as described above, is of an appropriate size and shape to be coupled to the wagon (2) or to other trolleys.

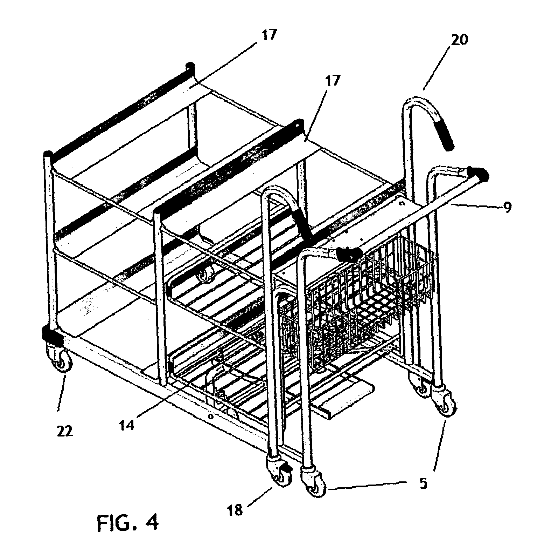

The modular trolley (1), illustrated in figures 1 to 4, may be coupled to the wagon (2) or to another equipment of transport existing in the store or warehouse, such as is the case of restocking trolleys or trucks.

The aforementioned tabletPC, illustrated in Figures 1 and 3, comprises an optical bar code reading device (13), both of them being powered by a gel-type battery (11), in which software has been installed so that the information concerning the purchase orders and the relevant items can be displayed and checked.

The gel-type battery (11), illustrated in Figures 1 and 3, is supported by the metal grid basket (10) which is positioned under the handle-bar (9) and offers a working autonomy of up to 12 hours. This equipment is suitable to be used in stores and warehouses and also to be transported in the modular trolley (1).

As shown in the figures 1 to 3, the wagon (2) is comprised of a metallic structure which includes a chassis (13) and vertical and horizontal elements, to which may be fixed three or four supporting elements for shipping boxes (3). The chassis (21) comprises four directional caster wheels (22), two of them with pedal brakes (18), and a pedal mechanism (18) for coupling and uncoupling the modular trolley (1). There are six vertical elements (15), aligned in pairs, two of which ending with stick handles (9). The horizontal elements (16) are connected to the vertical elements (15). Each supporting element includes two rails (17) for the sliding and transport of shipping boxes (3) which are fixed, respectively, to the vertical elements (15) and to the horizontal elements (16) and/or to the chassis (5).

The metallic structure of the wagon (2), as described above, is of an appropriate size and configuration so as to allow it to be coupled to the modular trolley (1).

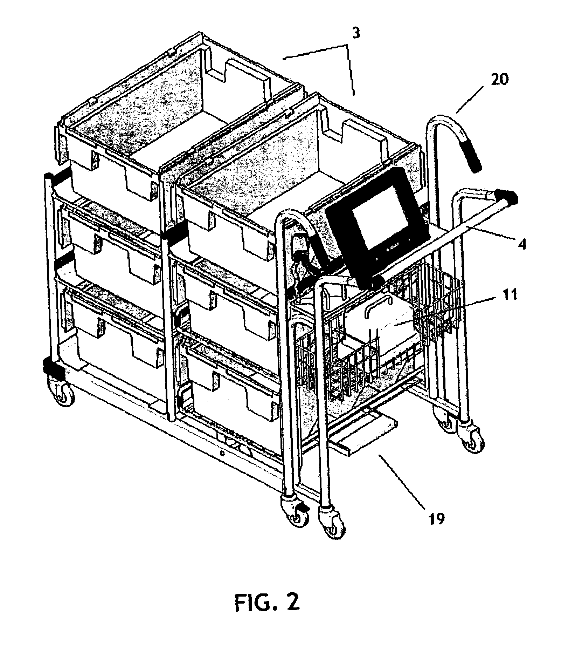

The access to each shipping box (3) is done irrespectively of whether the modular trolley (1) and the wagon (2) are separated or attached, as shown in the figures 1 and 2.

As can be observed in the figures 1 to 4, on the modular trolley (1) the handling of the shipping boxes (3) can be made by sliding them over the two metal grid racks (14) or by laying them on the upper metal grid rack (14).

In the figures 1 to 4, it is further observed that the access to the shipping boxes (3) of the wagon (2) may be also made by sliding them over the rails (17) and/or by laying them on the rails (17) located in the upper section.

When installed in the set composed of a modular trolley (1) and a wagon (2), the tabletPC-like device (12) with a bar code reader (13), as illustrated in the Figures 1 and 2, will allow all the operations to be assisted by a software so that the information concerning the orders and the relevant items is displayed and checked, either while moving the set composed of a modular trolley (1) and a wagon (2), or while moving the modular trolley (1) if the latter is made to circulate separately from the wagon (2), thus enabling the goods to be collected in stores or warehouses for orders fulfilment, such as for instance the orders that are placed by clients through Internet.

The tabletPC (12) is provided with a touch screen enabling a fast and easy interaction with the software.

All the modifications, on condition that these do not change the essential characteristics of the following claims, shall be considered within the granted scope of protection.

### Captions of the Figures

Modular trolley (1)
Wagon (2)

Shipping boxes (3)
Chassis (4)
Directional caster wheels (5)
Reinforcing elements (6)
Vertical rods (7)
Tray for hardware (8)
Handle-bar (9)
Metal grid basket (10)
Battery (11)
TabletPC with touch screen (12)
Bar code reader (13)
Metal grid rack (14)

Vertical elements (15)
Horizontal elements (16)
Rails (17)
Caster wheels with pedal brake (18)
Unlatching system with pedal (19)
Stick handles (20)
Chassis (21)
Caster wheels (22)

## Claims

1. A set composed of a modular trolley (1) and a wagon (2), for the transport of shipping boxes (3), wherein the modular trolley (1) comprises a tray (8) for a computer device which is powered by a gel-type battery (11), the said device being comprised of a tabletPC-like hardware with touch screen (12) and a bar code reader (13), for the purpose of knowing and checking the information as regards the purchase orders, **characterized in that** the modular trolley (1) and the wagon (2) can be coupled/uncoupled and moved separately or together depending on the needs of the operator or on the available space of the store or warehouse.

2. A set composed of a modular trolley (1) and a wagon (2), according to the previous claim, **characterized in that** the modular trolley (1) has the shape of a "L" and is comprised of a metallic structure which includes:
- a horizontal chassis (4) with four directional caster wheels (5);
- two vertical L-shaped reinforcing elements (6) which are connected, respectively, to the two vertical rods (7);
- two vertical rods converging into a handle-bar (9) ;
- a tray for hardware (6), positioned under the handle-bar (9), which is supported by the vertical reinforcing elements (6) and the vertical rods (7);
- a metal grid basket (10), located under the handle-bar (9), which is supported by the vertical reinforcing elements (6) and the vertical rods (7);
- a metal grid rack (14), for the sliding and transport of shipping boxes (3), which is supported by the reinforcing elements (6).

3. A set composed of a modular trolley (1) and a wagon (2), according to the previous claims, **characterized in that** the modular trolley (1) may have one or two metal grid racks (14), for the sliding and transport of shipping boxes (3), which are supported by the two reinforcing elements (6).

4. A set composed of a modular trolley (1) and a wagon (2), according to the previous claims, **characterized in that** the wagon (2) comprises a metallic structure including:
- a chassis (21) with four directional caster wheels (22), two of them having brake pedals (18) and a pedal mechanism (19) for unlatching the modular trolley (1).
- Six vertical elements (15), two of which ending with stick handles (9)
- Horizontal elements (16) which are connected to the vertical elements (15);
- depending on the configuration of the modular trolley (1), it can have four or five supporting elements, each of them comprising two rails (17) for sliding and carrying the shipping boxes (3) which are fixed, respectively, to the vertical elements (15) and to the horizontal elements (16) and/or to the chassis (4).

5. A set composed of a modular trolley (1) and a wagon (2), according to the previous claims, **characterized in that** the modular trolley (1) is susceptible of being coupled to another equipment of transport existing in the store or warehouse, such as is the case of restocking trolleys or trucks.

6. A set composed of a modular trolley (1) and a wagon (2), according to the previous claims, **characterized in that** the shipping boxes (3) can be handled irrespectively of whether the modular trolley (1) and the wagon (2) are separated or attached.

7. A set composed of a modular trolley (1) and a wagon (2), according to the previous claims, **characterized in that** the shipping boxes (3) can be handled by sliding, laying and lifting in the upper rack (14) and on the upper rails (17) of the modular trolley (1) and wagon (2), respectively.

8. A set composed of a modular trolley (1) and a wagon (2), according to the previous claims, **characterized in that** the wagon (2) has an adapted structure aimed at circulating in larger areas, while the modular trolley (1) has been designed to circulate in a faster and more flexible way in smaller areas.
